# FASCICULE DE BREVET EUROPEEN

(11) **EP 2 064 845 B1**
(45) Date de publication et mention de la délivrance du brevet: **20.07.2016**
(21) Numéro de dépôt: 07848333.6
(22) Date de dépôt: 18.09.2007
(51) Int. Cl.: H04L 12/70

(54) **PROCEDE POUR CONFIGURER LE PROFIL DE QUALITE DE SERVICE D'UN FLOT DONNE AU NIVEAU D'UN NOEUD D'ACCES D'UN RESEAU DE COMMUNICATION PAR PAQUETS**
VERFAHREN ZUR KONFIGURATION DES DIENSTQUALITÄTSPROFILS EINES VORGEGEBENEN DATENFLUSSES AM ZUGANGSKNOTEN EINES KOMMUNIKATIONSNETZWERKS
METHOD FOR CONFIGURING THE SERVICE QUALITY PROFILE OF A GIVEN FLOW AT THE ACCESS NODE OF A PACKET COMMUNICATION NETWORK

(30) Priorité: 18.09.2006 FR 0653791
(43) Date de publication de la demande: 03.06.2009
(73) Titulaire: Orange, 75015 Paris (FR)
(72) Inventeur: ROBERTS, James, 78960 Voisins Le Bretonneux (FR); OUESLATI, Sara, 92320 Chatillon (FR)
(74) Mandataire: Lecomte, Isabelle
(86) Numéro de dépôt international: PCT/FR2007/051961
(87) Numéro de publication internationale: WO 2008/035006

(56) Documents cités:
- US-A1- 2004 057 456
- PAPAIOANNOU ET AL.: "Efficient Agent-Based Selection of DiffServ SLAs over MPLS Networks Within the ASP Service Model" JOURNAL OF NETWORK AND SYSTEMS MANAGEMENT, vol. 10, no. 1, mars 2002 (2002-03), pages 63-90, XP002427221
- CHIU A L ET AL: "A STATE DEPENDENT DYNAMIC TRIGGERING SCHEME FOR FLOW-BASED QOS SHORTCUTS" PROCEEDINGS OF THE INTERNATIONAL TELETRAFFIC CONGRESS. ITC-16. TELETRAFFIC ENGINEERING IN A COMPETITIVE WORLD. EDINBURGH, UK, JUNE 7, vol. VOL. 3A, 7 juin 1999 (1999-06-07), pages 217-226, XP000877628 ISBN: 0-444-50268-8

## Description

L'invention concerne une technique pour configurer le profil de qualité de service d'un flot dans un réseau de communication par paquets.

Dans un réseau de communication par paquets, des noeuds, dits noeuds d'accès, sont plus particulièrement en charge d'acheminer les paquets à destination ou en provenance des passerelles d'utilisateur sur le lien de terminaison finale entre le réseau de communication et l'utilisateur. Ce lien est couramment appelé le "dernier kilomètre". Un DSLAM pour "Digital Subscriber Line Access Multiplexer" peut jouer ce rôle de noeud d'accès et gérer une ou plusieurs lignes DSL. De façon alternative, il peut s'agir par exemple d'un noeud d'accès sans fil. La passerelle d'utilisateur constitue le point d'entrée unique vers les équipements d'un ou de plusieurs utilisateurs.

Un flot est caractérisé par un certain nombre de caractéristiques communes à plusieurs paquets. Ces caractéristiques, ou éléments d'identification, peuvent être présentes dans différentes couches du modèle OSI pour Open Systems Interconnection model en anglais. Elles peuvent correspondre aux contenus des champs d'adresses source et/ou destination (couche 3), ou de tout autre champ dans l'entête des paquets, notamment le type de protocole (couche 3) et les numéros de port dans le cas des segments TCP ou UDP (couche 4). Dans le sens montant, c'est-à-dire pour les paquets appartenant à un flot en provenance d'une passerelle d'utilisateur et à destination du noeud d'accès, la passerelle d'utilisateur est en charge de déterminer une catégorie de flots relativement à des besoins de qualité de service et d'appliquer ensuite un profil de qualité de service en fonction de la catégorie du flot considéré. Il s'agit par exemple de privilégier les paquets de données des communications en temps réel par rapport à ceux transmis dans le cadre d'applications telles que la consultation de sites Web.

Un article du « Journal of Network and Systems Management », Viol.10, No.1, de mars 2012 intitulé «Efficient Agent-Based Selection of DiffServ SLAs over MPLS Networks Within the ASP Service Model » de T. Papaioannou et al., présente une méthode de négociation de profil de qualité de service entre un utilisateur et un fournisseur de réseau pour une application donnée.

En ce qui concerne le sens descendant, c'est-à-dire pour les paquets transmis par le noeud d'accès à destination de la passerelle d'utilisateur, il existe des techniques de gestion de bande passante permettant un partage des ressources de bande passante en fonction d'une catégorie de flots relativement à des besoins de qualité de service. Une telle technique est par exemple décrite dans la demande de brevet US publiée sous le numéro US 2005/0005023. Une table de flots est utilisée pour contrôler le trafic à destination d'un utilisateur. Sur réception d'un paquet appartenant à un flot, le procédé extrait des attributs représentatifs de la catégorie de ce flot et applique différents masques afin d'obtenir une clé d'accès dans la table de flots. Cette clé d'accès permet de définir le profil de qualité de service à appliquer à la transmission des paquets du flot. Les règles de gestion de la table sont définies par l'opérateur du noeud d'accès de façon statique. De plus, dans le cas d'un réseau pair-à-pair, certains attributs sont affectés dynamiquement comme par exemple, le numéro de port TCP. Les règles de gestion de la table étant définies de façon statique, il en résulte que le procédé n'est pas capable de s'adapter à l'apparition de flots relevant de catégories non encore référencées, transmis par exemple dans le cadre du réseau pair-à-pair ou bien dans le cadre de la mise en oeuvre d'applications nouvelles, inconnues de l'opérateur du noeud d'accès mais néanmoins proposées aux utilisateurs du réseau de cet opérateur depuis l'extérieur de ce réseau.

Il existe donc un besoin d'une technique permettant de définir et de faire évoluer les règles de gestion de la qualité de service pour le trafic d'un utilisateur à destination de la passerelle.

L'invention répond à ce besoin en proposant un procédé pour configurer le profil de qualité de service d'un flot donné au niveau d'un noeud d'accès d'un réseau de communication par paquets auquel est connecté au moins une passerelle d'utilisateur destinataire dudit flot. Le procédé comprend :
- une étape de détermination par la passerelle en fonction d'une catégorie du flot d'un profil de qualité de service à associer au flot, de sa propre initiative, déclenchée sur réception d'un paquet en provenance du noeud d'accès, ledit paquet permettant à la passerelle d'obtenir des informations relatives à la catégorie du flot ;
- une étape d'envoi par la passerelle au noeud d'accès du profil de qualité de service ainsi déterminé, ce profil étant destiné à être utilisé par le noeud d'accès pour la transmission des paquets à destination de la passerelle et appartenant au flot considéré.

A l'initialisation, une table de flots associée à la passerelle, cette dernière étant située chez l'utilisateur, et mémorisant des profils de qualité de service associés à des identifiants de flot est vide d'enregistrements. Le procédé détermine un profil de qualité de service à associer à un flot et transmet au noeud d'accès le profil de qualité de service à associer au flot. Cette étape de détermination est déclenchée sur réception d'un paquet en provenance du noeud d'accès. Elle est effectuée à l'initiative de la passerelle d'utilisateur et non sur demande d'un autre équipement du réseau. Le couple (flot, profil de qualité de service) est mémorisé dans la table de flots associée à la passerelle et communiqué au noeud d'accès afin de lui permettre d'adapter le profil de qualité de service des paquets appartenant à ce même flot qui seront transmis ultérieurement sur le lien descendant. Les critères qui déterminent ce profil dépendent notamment de l'application concernée ou de la destination finale des paquets à l'intérieur de l'installation de l'utilisateur. La détermination du profil de qualité de service étant effectuée dans la passerelle d'utilisateur, elle est réalisée sur la base de paquets qui ont, le cas échéant, été déchiffrés par la passerelle. En effet, le noeud d'accès ne peut pas extraire les informations nécessaires à la détermination d'un profil de qualité de service dans le cas où les paquets sont chiffrés, la fonction de déchiffrement s'effectuant dans la passerelle d'utilisateur. Il est donc particulièrement avantageux d'effectuer cette association de profil de qualité de service et de flot au niveau de la passerelle d'utilisateur.

Les critères de détermination peuvent également évoluer dynamiquement en fonction d'applications nouvelles initiées par un utilisateur connecté à la passerelle d'utilisateur et connues uniquement de ce dernier. C'est pourquoi, il est plus efficace d'effectuer une gestion des critères de détermination de profil de qualité de service dans la passerelle d'utilisateur. L'invention permet également de bloquer certains flots non désirés en leur associant un profil de qualité de service spécifique.

Avantageusement, le paquet en provenance du noeud d'accès appartient au flot considéré.

Ceci permet de déterminer le profil de qualité de service à appliquer aux paquets suivants du flot à partir des informations contenues dans le paquet reçu qui permet d'identifier, notamment, l'application et la destination du flot à l'intérieur de l'installation de l'utilisateur.

Dans un autre mode de réalisation, le paquet en provenance du noeud d'accès appartient à un autre flot et comprend une information de création du flot considéré.

Ainsi, l'étape de détermination d'un profil de qualité de service du flot considéré est déclenchée après décodage du paquet appartenant à un autre flot et contenant une information de création du flot considéré.

En outre, les étapes de détermination et d'envoi du profil de qualité de service sont effectuées à l'issue d'une étape de recherche d'un identifiant du flot dans une table de flots associée à la passerelle et mémorisant des profils de qualité de service associés à des identifiants de flots et si ladite recherche est négative.

Le procédé permet de réaliser les étapes de détermination et d'envoi en particulier si le paquet appartient à un flot considéré comme nouveau pour la passerelle d'utilisateur. Le procédé met donc en oeuvre une étape de recherche dans la table de flots de la passerelle afin de vérifier si le flot est nouveau pour la passerelle. Si tel est le cas, la passerelle détermine alors le profil de qualité de service à associer au flot et configure le noeud d'accès afin qu'il applique le profil de qualité de service associé.

En outre, sur réception par le noeud d'accès d'un paquet à destination de la passerelle d'utilisateur, ce paquet appartenant à un flot considéré, il est prévu :
- une étape de recherche d'un profil de qualité de service associé à l'identifiant dudit flot dans une table de flots associée au noeud et mémorisant des profils de qualité de service associés à des flots;
- si la recherche est négative, une étape de transmission du paquet vers la passerelle avec application d'un profil de qualité de service par défaut.

Le noeud d'accès gère une table de flots mémorisant également des profils de qualité de service associés à des identifiants de flots. Au fur et à mesure de l'arrivée de paquets appartenant à un flot, on recherche dans la table de flots associée au noeud d'accès si l'identifiant est mémorisé dans celle-ci. Si l'identifiant est inconnu dans la table, le noeud d'accès transmet le paquet du nouveau flot à destination de la passerelle d'utilisateur à laquelle est destiné le flot avec application d'un profil de qualité de service par défaut. En effet, les flots non identifiés doivent pouvoir arriver jusqu'à la passerelle afin que celle-ci puisse définir un profil de qualité de service à associer au flot tout en limitant le flux de ces flots afin de protéger la qualité de service des flots connus.

En outre, le procédé comprend une étape préalable de définition de catégories de flots relativement à des besoins de qualité de service et dans lequel l'étape de détermination par la passerelle d'un profil de qualité de service à associer à l'identifiant du flot comprend les sous-étapes consistant au moins à
- sélectionner pour le flot considéré l'une parmi lesdites catégories et,
- en fonction de la catégorie sélectionnée, associer à l'identifiant du flot un profil de qualité de service associé à ladite catégorie.

Des règles d'association de profil de qualité de service sont définies au préalable au niveau de la passerelle d'utilisateur. A partir des informations caractérisant le flot, on détermine alors une catégorie de flot, ainsi que le profil de qualité de service associé à cette catégorie de flot, par lecture de la règle d'association de profil de qualité de service. Ces règles sont donc gérées par utilisateur et en fonction de ses besoins et peuvent éventuellement être mises à jour dynamiquement afin de prendre en compte notamment de nouvelles applications ou de nouveaux services.

En outre, on associe à l'identifiant du flot considéré un paramètre temporel d'arrivée d'un paquet du flot, ledit paramètre étant mis à jour sur réception d'un nouveau paquet du flot dans les deux tables de flots respectivement associées au noeud d'accès et à la passerelle, ledit procédé comprenant en outre une étape d'expulsion des flots inactifs depuis une durée déterminée.

Les deux tables associées au noeud d'accès et à la passerelle d'utilisateur respectivement mémorisent également pour chaque flot un paramètre représentatif de l'instant d'arrivée du dernier paquet reçu du flot. Ainsi, les tables peuvent expulser les couples correspondant à des flots périmés.

L'invention concerne en outre une passerelle d'utilisateur dans un réseau de communication par paquets, agencée pour recevoir des paquets appartenant à au moins un flot en provenance d'un noeud d'accès, comprenant :
- des moyens de détermination en fonction d'une catégorie du flot d'un profil de qualité de service, agencés pour déterminer un profil de qualité de service à associer au flot, suite à la réception d'un paquet en provenance du noeud d'accès, ledit paquet permettant à la passerelle d'obtenir des informations relatives à la catégorie du flot ;
- des moyens d'envoi au noeud d'accès du profil déterminé de qualité de service à associer au flot donné pour la transmission de paquets à destination de la passerelle et appartenant au flot donné.

L'invention concerne également un noeud d'accès dans un réseau de communication par paquets, coopérant avec au moins une passerelle d'utilisateur telle que décrite précédemment, agencé pour transmettre des paquets appartenant à des flots vers ladite passerelle d'utilisateur en fonction d'un profil de qualité de service associé aux flots, caractérisé en ce qu'il comprend :
- des moyens de réception, en provenance de la passerelle, d'un profil de qualité de service à associer à un flot pour la transmission de paquets à destination de la passerelle et appartenant au flot donné ;
- des moyens d'enregistrement dans une table de flots du profil de qualité de service reçu et à associer à un identifiant du flot considéré.

L'invention concerne également un système dans un réseau de communication par paquets comprenant au moins un noeud tel que décrit précédemment et au moins une passerelle d'utilisateur telle que décrite précédemment.

L'invention concerne également :
- un programme de configuration de profils de qualité de service de flot, pour un noeud d'accès d'un réseau de communication par paquets, comprenant des instructions de programme pour recevoir, en provenance d'une passerelle, un profil de qualité de service à associer à un flot et pour enregistrer dans une table de flots le profil de qualité de service reçu et à associer au flot considéré, ledit profil étant destiné à être utilisé par le noeud d'accès pour la transmission des paquets à destination de la passerelle et appartenant au flot considéré, lorsque ledit programme est exécuté par celui-ci :
- un support d'enregistrement lisible par un noeud d'accès sur lequel est enregistré le programme précédemment décrit.

L'invention concerne également :
- un programme pour passerelle d'utilisateur d'un réseau de communication par paquets, de commande de la configuration de profils de qualité de service de flot au niveau d'un noeud d'accès dudit réseau, comprenant des instructions de programme destinées à commander l'exécution de celles des étapes du procédé tel que décrit ci-dessus qui sont exécutées par ladite passerelle, lorsque ledit programme est exécuté par celle-ci ;
- un support d'enregistrement lisible par une passerelle d'utilisateur sur lequel est enregistré le programme précédemment décrit.

Dans un mode de réalisation particulier, lors de l'étape d'envoi du profil de qualité de service, la passerelle d'utilisateur émet à destination du noeud d'accès un signal véhiculant un message de configuration du noeud d'accès comprenant ledit profil de qualité de service à associer à un flot donné.

L'invention sera mieux comprise à l'aide de la description suivante d'un mode de réalisation particulier du procédé de l'invention, en référence aux dessins annexés sur lesquels :
- la figure 1 représente une architecture de réseau de communication par paquets ;
- la figure 2 représente les étapes du procédé dans une passerelle d'utilisateur selon un mode particulier de réalisation de l'invention ;
- la figure 3 représente les étapes du procédé dans un noeud d'accès selon un mode particulier de réalisation de l'invention ;
- la figure 4 représente un message de configuration selon un mode particulier de réalisation de l'invention ;
- la figure 5 représente une passerelle d'utilisateur selon l'invention ;
- la figure 6 représente un noeud d'accès selon l'invention ;
- la figure 7 représente une description de flot ;
- la figure 8 représente les étapes du procédé dans un noeud d'accès sur réception d'un message de configuration.

On notera d'emblée qu'un flot correspond à un échange de paquets entre deux machines d'un réseau de communication par paquets dont les paquets ont des caractéristiques communes notamment ici des caractéristiques communes d'origine, de destination et de service. Par la suite, ces caractéristiques sont appelées caractéristiques de flot. Un identifiant du flot est construit à l'aide de ces caractéristiques communes.

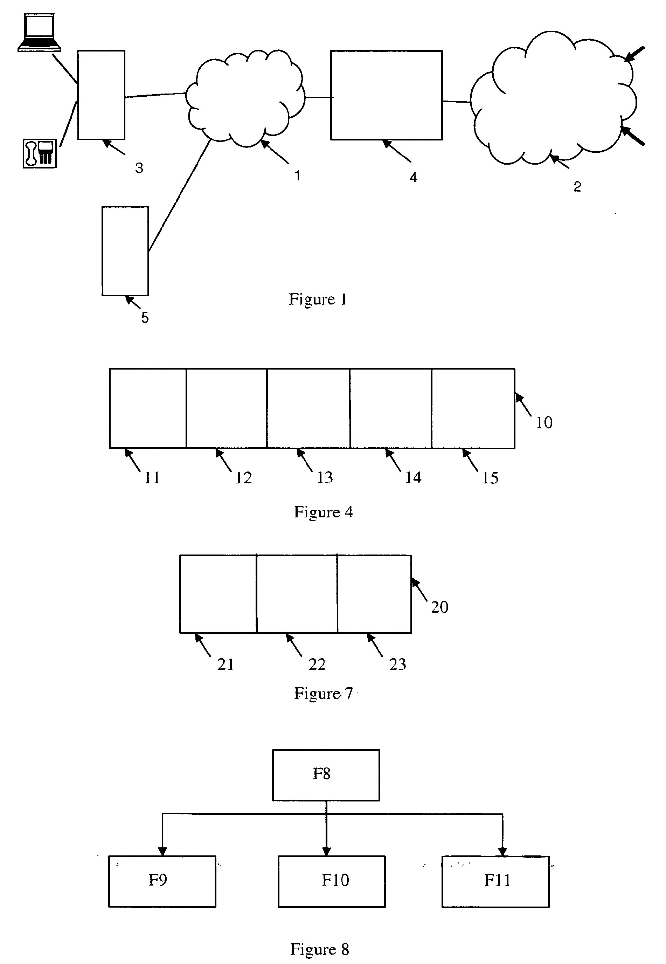

Sur la figure 1, on a représenté une partie d'un réseau de communication par paquets comprenant un noeud d'accès 4 et deux passerelles d'utilisateur 3 et 5. Le noeud d'accès 4 permet de relier les utilisateurs au réseau amont 2 au travers d'un réseau d'accès 1.

Dans un premier mode particulier de réalisation, le noeud d'accès 4 est un DSLAM pour "Digital Subscriber Line Access Module" et le réseau d'accès 1 est réduit à une ligne xDSL.

Dans un deuxième mode particulier de réalisation, le noeud d'accès 4 est un noeud de routage situé en amont du DSLAM. Dans ce cas, le réseau d'accès 1 comprend, en plus de la ligne xDSL de l'utilisateur, un sous réseau entre le noeud d'accès et le DSLAM qui est partagé par une pluralité d'utilisateurs.

Dans un troisième mode particulier de réalisation, le réseau d'accès 1 est un réseau sans fil qui relie une pluralité d'utilisateurs au réseau amont 2 au travers d'un noeud d'accès 1 sans fil.

Une passerelle d'utilisateur 3, 5 constitue le point d'entrée unique vers les équipements de l'utilisateur, par exemple un téléphone ou un ordinateur. Elle est située chez l'utilisateur. La passerelle émet les paquets en sens montant, c'est-à-dire le trafic de la passerelle 3, 5 vers le noeud d'accès 4, en appliquant par exemple des profils de qualité de service différents en fonction de l'application concernée et aiguille les paquets entrants, c'est-à-dire les paquets émis par le noeud d'accès 4 vers la passerelle 3, 5, vers l'équipement de l'utilisateur et l'application concernée au sein de l'installation de l'utilisateur.

La passerelle d'utilisateur peut constituer un point d'accès partagé entre plusieurs utilisateurs appartenant par exemple à une entreprise ou à un collectif d'utilisateurs.

Le noeud d'accès 4 utilise une table 205 de flots. Une description 20 de flot, telle que représentée à la figure 7, comprend les éléments suivants:
- un identifiant 21 du flot ;
- un profil 22 de qualité de service associé au flot ;
- une date 23 correspondant à la date où les dernières informations concernant le flot ont été reçues.

Un profil 22 de qualité de service peut contenir les informations suivantes:
- une priorité, permettant de définir des priorités relatives entre les paquets ;
- un poids associé à un flot: parmi les paquets d'un même niveau de priorité, le débit réalisé par le flot est proportionnel au poids ;
- un débit maximal que peut atteindre le flot ;
- un débit minimal que le flot doit pouvoir atteindre lorsqu'il a des paquets à transmettre.

La table 205 de flots mémorise des descriptions 20 de flots pour un utilisateur. De façon optionnelle, elle mémorise les descriptions de flot d'une pluralité d'utilisateurs.

Pour la suite de la description, on se place dans le cas où le noeud d'accès 4 possède une table 205 par utilisateur.

La passerelle d'utilisateur 3, 5 utilise, quant à elle, une table 105 de flots, qui mémorise des descriptions 20 de flots.

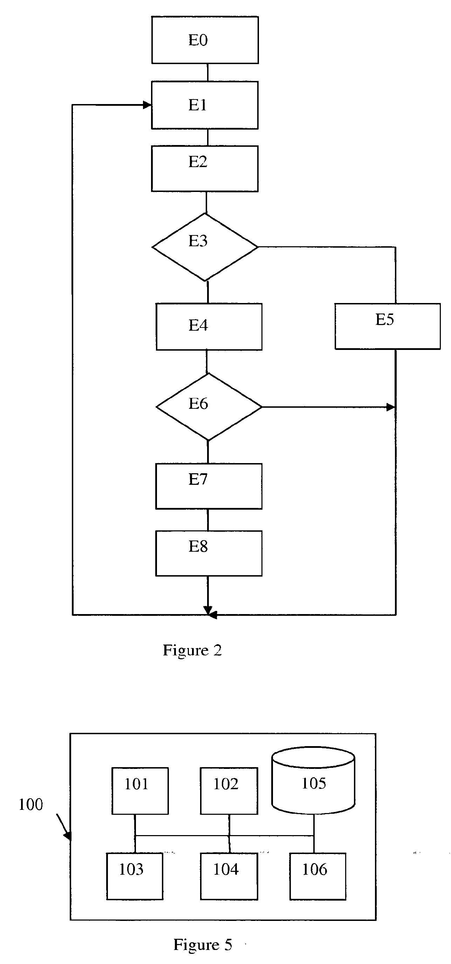

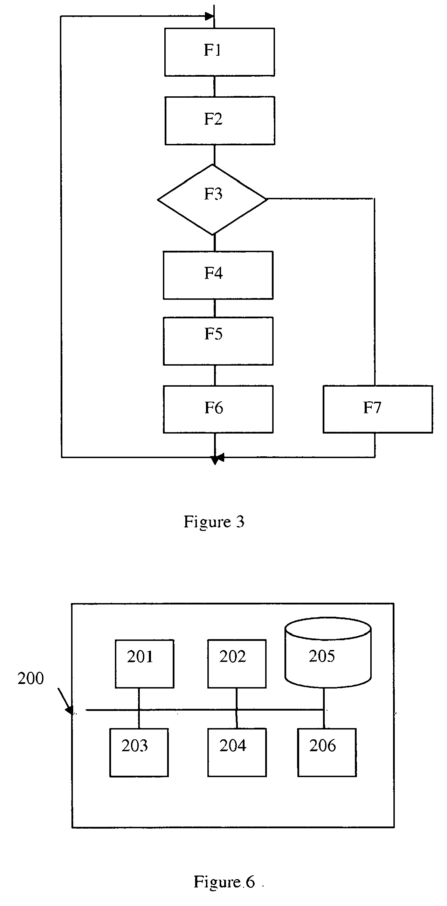

Le procédé pour configurer le profil de qualité de service d'un flot donné au niveau d'un noeud d'accès 4 d'un réseau de communication par paquets auquel est connectée une passerelle d'utilisateur 3, 5 va maintenant être décrit en référence aux figures 2 et 3.

Dans un premier temps, on décrit les étapes du procédé dans le noeud d'accès en référence à la figure 3.

La première étape F1 du procédé au noeud d'accès consiste en la réception d'un paquet par le noeud d'accès 4 à destination de la passerelle d'utilisateur 3, 5. Lors d'une deuxième étape F2, le noeud d'accès détermine un identifiant du flot.

Dans une troisième étape F3, il recherche dans la table 205 l'identifiant de flot. De façon optionnelle, la recherche dans la table 205 s'effectue en calculant le résultat d'un identifiant du flot entrant par une fonction de hachage telle que la fonction SHA-1 (pour Secure Hash Algorithm) et en recherchant ce résultat dans la table 205.

Si la recherche est négative, c'est-à-dire qu'il n'y a pas de description de flot correspondant à l'identifiant 21 de flot dans la table 205, dans une étape F7, le noeud d'accès transmet à la passerelle 3, 5 d'utilisateur le paquet avec application d'un profil de qualité de service par défaut. Ainsi, ce profil doit permettre la transmission des flots non encore mémorisés dans la table 205 sans pour autant altérer la qualité de service des flots dont le profil de qualité de service est connu du noeud d'accès, autrement dit déjà mémorisés dans la table 205. Il peut s'agir de réserver une partie de la bande passante disponible en priorité pour acheminer les flots non connus. Le procédé repasse à l'étape F1 en attente de réception d'un paquet.

Si la recherche est positive, c'est-à-dire qu'il y a une description de flot correspondant à l'identifiant 21 de flot dans la table 205, dans une étape F4, le noeud d'accès lit dans la description de flot trouvée un profil 22 de qualité de service associé à l'identifiant 21 du flot dans la table 205 de flots associée au noeud et dans une étape F5, il met à jour la date 23 de la description de flot trouvée à l'aide de la date de réception du paquet par le noeud d'accès. Le paquet est ensuite transmis, dans une étape F6, à un procédé d'ordonnancement, par exemple un procédé d'ordonnancement équitable WFQ (pour "Weighted Fair Queuing"), pour une transmission vers la passerelle 3,5 d'utilisateur en appliquant le profil de qualité de service associé à l'identifiant du flot. Le procédé repasse à l'étape F1 en attente de réception d'un paquet.

Nous allons maintenant décrire le procédé tel qu'il se déroule sur une passerelle d'utilisateur en référence à la figure 2.

Une étape E0 préalable de définition permet de définir des règles associant des catégories de flots relativement à des besoins de qualité de service. Il s'agit de définir des préférences de l'utilisateur. Il existe dans le sens montant des procédés pour associer des profils de qualité de service en fonction de l'application. Ainsi, dans le sens montant, l'utilisateur peut par exemple paramétrer sa passerelle pour que, lors de l'utilisation d'une application de téléphone sur IP, une priorité maximale soit attribuée aux paquets de la communication téléphonique au détriment d'autres applications non temps réel. L'étape de définition des règles permet ainsi de définir des catégories de flots, en fonction de critères, notamment en fonction de l'application concernée, et d'y associer un profil de qualité de service. Ainsi, si un utilisateur utilise une application particulière dans un réseau pair-à-pair, en fonction du port TCP ou UDP utilisé par cette application, on paramètre la passerelle pour y associer un profil de qualité de service pour le sens montant. Dans un mode de réalisation d'une passerelle à laquelle sont connectés une pluralité d'utilisateurs, les catégories de flots peuvent également prendre en compte l'utilisateur final.

Il s'agit donc dans cette étape préalable E0 d'associer de la même façon un profil de qualité de service pour le sens descendant. Le procédé permet ainsi de commander la définition du profil de qualité de service à appliquer, par le noeud d'accès, dans le sens descendant à partir de la passerelle d'utilisateur. Il est particulièrement efficace pour des applications qui utilisent des ports dynamiques définis arbitrairement, telles que des applications de partage de fichier dans un réseau pair à pair. Il est également efficace pour des applications dont le contenu des paquets y compris les numéros de port est chiffré.

L'utilisateur peut également choisir de bloquer un flot particulier, en y associant un profil de qualité de service particulier: une priorité nulle ou bien un débit maximum nul.

L'étape E1 du procédé, mise en oeuvre par la passerelle d'utilisateur, consiste en la réception d'un paquet par la passerelle d'utilisateur 3 en provenance d'un noeud d'accès 4. Lors d'une deuxième étape E2, on détermine un identifiant du flot.

Dans une troisième étape E3, on recherche dans la table 105 l'identifiant de flot. De façon optionnelle, la recherche dans la table 105 s'effectue en calculant le résultat d'un identifiant du flot entrant par une fonction de hachage telle que la fonction SHA-1 et en recherchant ce résultat dans la table 105.

Si la recherche est positive, c'est-à-dire s'il y a une description de flot correspondant à l'identifiant 21 de flot dans la table 105, dans une étape E5, on met à jour la date 23 de la description de flot trouvée à l'aide de la date de réception du paquet par la passerelle. Le paquet est ensuite transmis à l'application concernée. Le procédé repasse à l'étape E1 en attente de réception d'un paquet.

Si la recherche est négative, c'est-à-dire s'il n'y a pas de description de flot correspondant à l'identifiant 21 de flot dans la table 105, dans une étape E4 de détermination, la passerelle sélectionne, de sa propre initiative, pour ce flot la catégorie de flots relativement à des besoins de qualité de service à laquelle il correspond. La sélection s'effectue en fonction des règles définissant les catégories de flots déterminés à l'étape E0, par exemple à partir des informations contenues dans le paquet: ports TCP ou UDP, adresse source, application concernée, utilisateur final, équipement terminal... Ces règles sont propres à la passerelle. En fonction de la catégorie de flot sélectionnée, le procédé détermine, dans une étape E6, si les flots de cette catégorie font l'objet d'une association d'un profil de qualité de service.

Si les flots de cette catégorie ne font pas l'objet d'une association d'une catégorie de service, le procédé repasse à l'étape E1 d'attente de réception d'un paquet.

Si les flots de cette catégorie font l'objet d'une association d'une catégorie de service, un profil de qualité de service est à associer à l'identifiant du flot en fonction de la catégorie du flot et dans une étape E7, la passerelle mémorise dans la table 105 de flots un identifiant 21 du flot, un profil 22 de qualité de service et une date 23 correspondant à la date de réception du paquet par la passerelle. A titre d'exemple, un utilisateur peut donner une priorité maximale à des applications de jeu en réseau afin de bénéficier d'une forte interactivité. Dans une étape E8, la passerelle transmet au noeud d'accès un message 10 pour configurer le profil de qualité de service du flot au niveau du noeud d'accès. Le message 10 est de préférence transmis par la passerelle vers le noeud d'accès de façon sécurisée. Il comprend, par exemple, les éléments suivants :
- un entête 11 correspondant à celle du protocole de réseau mis en oeuvre, par exemple, TCP/IP ;
- un champ 12 représentatif d'un type de message, permettant au noeud d'accès 4 d'identifier l'action qu'il doit effectuer dans la table 205 de flots associée au noeud d'accès ;
- un champ 13 représentatif de l'utilisateur concerné par l'action indiquée dans le champ type de message ;
- un champ 14 représentatif de l'identifiant 21 du flot concerné par le message 10 ;
- un champ 15 représentatif d'un profil de qualité de service à associer au flot concerné par le message.

Le champ 12 représentatif d'un type de message peut prendre des valeurs telles que "création", "modification", "suppression".

A l'étape E8, le message 10 indique dans le champ 12 représentatif d'un type de message la valeur "création". Le traitement effectué par le noeud d'accès à la réception de ce message est décrit ultérieurement en relation avec la figure 8.

Le procédé repasse à l'étape E1 en attente de réception d'un paquet.

Le procédé comprend en outre une étape, non représentée sur les figures, d'expulsion de la table 105 de flots, associée à la passerelle, des flots inactifs depuis une durée déterminée. Cette étape peut être réalisée de façon périodique. Elle peut déclencher de façon optionnelle l'envoi d'un message 10, indiquant dans le champ 12 représentatif d'un type de message la valeur "suppression" à destination du noeud 4 d'accès afin de modifier en cohérence la table 205 de flots, associée au noeud d'accès.

Optionnellement, de la même manière, la passerelle peut modifier le profil d'un flot inscrit à la table 105 et transmettre un message 10, indiquant dans le champ 12 représentatif d'un type de message la valeur "modification" à destination du noeud 4 d'accès afin de modifier en cohérence la table 205 de flots, associée au noeud d'accès. Cette modification peut intervenir suite à un événement nécessitant, par exemple, une réactualisation des priorités relatives des flots en cours. Il peut s'agir en particulier de dégrader la priorité d'un flot au profit d'autres flots ultérieurs.

Dans une variante, lors de l'étape E1, on reçoit un paquet appartenant à un flot. Lors d'une étape de décodage du paquet reçu par l'application concernée par ce flot, non représentée sur les figures, la passerelle d'utilisateur obtient une information qu'un nouveau flot va être créé pour une transmission de paquets entre le noeud d'accès et la passerelle d'utilisateur. L'étape de détermination d'un profil de qualité de service est déclenchée par l'information de création d'un flot. La passerelle détermine alors, de sa propre initiative, une catégorie de flot à laquelle appartient ce nouveau flot en fonction des informations transmises par l'application concernée et passe à l'étape E6 d'association d'un profil de qualité de service au nouveau flot en fonction de la catégorie du flot. Les étapes E6 à E8 se déroulent alors comme décrits ci-dessus.

Le procédé de gestion de la table 205 des flots associée au noeud 4 d'accès va maintenant être décrit en relation avec la figure 8.

A l'étape F8, le noeud d'accès reçoit un message 10 indiquant qu'une action est à effectuer dans la table 205 de flots associée au noeud 4 d'accès.

L'action à effectuer dépend de la valeur du champ 12 représentatif d'un type de message.

S'il contient la valeur "création", à l'étape F9, le noeud d'accès crée un nouvel enregistrement dans la table 205 de l'utilisateur indiqué dans le champ 13 représentatif de l'utilisateur concerné et on initialise la description de flot 20 en fonction des éléments reçus. Le noeud d'accès recopie le champ 14 représentatif de l'identifiant du flot concerné dans le champ 21 de la description de flot. Il recopie également le champ 15 représentatif d'un profil de qualité de service à associer au flot concerné dans le champ 22 de la description de flot et il initialise le champ 23 de la description de flot avec la date de réception au noeud d'accès du message 10.

S'il contient la valeur "modification", à l'étape F10, le noeud d'accès met à jour dans la table 205 de flots de l'utilisateur indiqué dans le champ 13 représentatif de l'utilisateur concerné, les champs de la description 20 de flot du flot identifié dans le champ 14 représentatif de l'identifiant du flot en fonction des informations reçues dans le message 10. Il recopie également le champ 15 représentatif d'un profil de qualité de service à associer au flot concerné dans le champ 22 de la description de flot et il initialise le champ 23 de la description de flot avec la date de réception du message 10.

S'il contient la valeur "suppression", à l'étape F11, le noeud d'accès supprime l'enregistrement de la table 205 de flots de l'utilisateur indiqué dans le champ 13 représentatif de l'utilisateur concerné.

Selon un mode de réalisation, le procédé comprend en outre une étape, non représentée sur les figures, d'expulsion de la table 205 de flots associée au noeud d'accès des flots inactifs depuis une durée déterminée. Cette étape peut être réalisée de façon périodique.

On va maintenant décrire la passerelle d'utilisateur, en référence à la figure 5.

En référence à la figure 5, la passerelle d'utilisateur comprend :
- une table 105 de flots, agencée pour mémorise des descriptions de flot 20 ;
- des moyens 106 pour recevoir des paquets appartenant à des flots en provenance d'un noeud d'accès ;
- des moyens 102 de détermination d'un profil de qualité de service, agencés pour déterminer le profil de qualité de service à associer à un flot, suite à la réception d'un paquet en provenance du noeud d'accès ;
- des moyens 103 d'envoi au noeud d'accès du profil de qualité de service déterminé par les moyens 102 de détermination à associer à un flot donné.

Dans un mode de réalisation particulier, la passerelle comprend également :
- des moyens 101 de recherche dans la table 105 de flots d'un identifiant de flot d'un paquet reçu ;
- des moyens 104 d'enregistrement, dans la table 105 de flots, d'une description de flot 20 comprenant le profil de qualité de service déterminé par les moyens 102 de détermination, dans le cas où la recherche par les moyens 101 de recherche dans la table 105 est négative pour un flot donné, à associer à un identifiant de flot donné.

On va maintenant décrire le noeud d'accès, en référence à la figure 6.

En référence à la figure 6, le noeud d'accès 200 comprend :
- une table 205 de flots, agencée pour mémorise des descriptions de flot 20 ;
- des moyens 201 de recherche d'un profil de qualité de service associé à un identifiant de flot dans la table 205 de flots ;
- des moyens 202 pour associer un profil de qualité de service à un flot en fonction du résultat de la recherche par les moyens 201 de recherche dans la table 205 de flots ,
- des moyens 203 de réception, en provenance de la passerelle, d'un profil de qualité de service à associer à un flot ;
- des moyens 204 d'enregistrement dans la table 205 de flots du profil de qualité de service reçu par les moyens 203 de réception et à associer à l'identifiant du flot considéré ;
- des moyens 206 pour transmettre des paquets appartenant à des flots vers au moins une passerelle d'utilisateur en fonction d'un profil de qualité de service associé aux flots.

Les modules 101, 102, 103, 104 qui mettent en oeuvre le procédé précédemment décrit, sont de préférence des modules logiciels comprenant des instructions logicielles pour faire exécuter les étapes du procédé précédemment décrit par la passerelle d'utilisateur 100.

Les modules 201, 202, 203, 204 qui mettent en oeuvre le procédé précédemment décrit, sont de préférence des modules logiciels comprenant des instructions logicielles pour faire exécuter les étapes du procédé précédemment décrit par le noeud d'accès 200.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne également :
- un programme de configuration de profils de qualité de service de flot, pour un noeud d'accès d'un réseau de communication par paquets, comprenant des instructions de programme pour recevoir, en provenance d'une passerelle, un profil de qualité de service à associer à un flot et pour enregistrer dans une table de flots le profil de qualité de service reçu et à associer au flot considéré, ledit profil étant destiné à être utilisé par le noeud d'accès pour la transmission des paquets à destination de la passerelle et appartenant au flot considéré, lorsque ledit programme est exécuté par celui-ci :
- un support d'enregistrement lisible par un noeud d'accès sur lequel est enregistré le programme précédemment décrit.

L'invention concerne également :
- un programme pour passerelle d'utilisateur d'un réseau de communication par paquets, de commande de la configuration de profils de qualité de service de flot au niveau d'un noeud d'accès dudit réseau, comprenant des instructions de programme destinées à commander l'exécution de celles des étapes du procédé tel que décrit ci-dessus qui sont exécutées par ladite passerelle, lorsque ledit programme est exécuté par celle-ci ;
- un support d'enregistrement lisible par une passerelle d'utilisateur sur lequel est enregistré le programme précédemment décrit.

## Revendications

1. Procédé pour configurer le profil de qualité de service d'un flot donné au niveau d'un noeud (4) d'accès d'un réseau de communication par paquets auquel est connecté au moins une passerelle (3, 5) d'utilisateur destinataire dudit flot, ledit procédé comprenant :
- une étape (E4, E6) de détermination par la passerelle en fonction d'une catégorie du flot d'un profil de qualité de service à associer au flot, de sa propre initiative, déclenchée sur réception d'un paquet en provenance du noeud d'accès, ledit paquet permettant à la passerelle d'obtenir des informations relatives à la catégorie du flot ;
- une étape (E8) d'envoi par la passerelle au noeud d'accès du profil de qualité de service ainsi déterminé, ledit profil étant destiné à être utilisé par le noeud d'accès pour la transmission des paquets à destination de la passerelle et appartenant au flot considéré.

2. Procédé selon la revendication 1, dans lequel ledit paquet en provenance du noeud d'accès appartient au flot considéré.

3. Procédé selon la revendication 1, dans lequel ledit paquet en provenance du noeud d'accès appartient à un autre flot et comprend une information de création du flot considéré.

4. Procédé selon la revendication 2 ou 3, dans lequel les étapes de détermination et d'envoi du profil de qualité de service sont effectuées à l'issue d'une étape (E3) de recherche d'un identifiant (21) du flot dans une table (105) de flots associée à la passerelle et mémorisant des profils (22) de qualité de service associés à des identifiants (21) de flots et si ladite recherche est négative.

5. Procédé selon l'une quelconque des revendications précédentes, dans lequel, sur réception par le noeud (4) d'accès d'un paquet à destination de la passerelle (3,5) d'utilisateur, ledit paquet appartenant à un flot considéré, il est prévu :
- une étape (F3) de recherche d'un profil de qualité de service associé à l'identifiant (21) dudit flot dans une table (205) de flots associée au noeud (4) et mémorisant des profils de qualité de service associés à des flots;
- si la recherche est négative, une étape de transmission du paquet vers la passerelle (3,5) avec application d'un profil de qualité de service par défaut.

6. Procédé selon l'une quelconque des revendications précédentes, comprenant en outre une étape (E0) préalable de définition de catégories de flots relativement à des besoins de qualité de service et dans lequel l'étape de détermination par la passerelle d'un profil de qualité de service à associer à l'identifiant du flot comprend les sous-étapes consistant au moins à
- sélectionner (E4) pour le flot considéré l'une parmi lesdites catégories et,
- en fonction de la catégorie sélectionnée, associer (E6) à l'identifiant du flot un profil de qualité de service associé à ladite catégorie.

7. Procédé selon l'une quelconque des revendications précédentes, dans lequel on associe à l'identifiant du flot considéré un paramètre temporel d'arrivée d'un paquet du flot, ledit paramètre étant mis à jour (E5, E7, F5) sur réception d'un nouveau paquet du flot dans les deux tables (105, 205) de flots respectivement associées au noeud d'accès et à la passerelle, ledit procédé comprenant en outre une étape d'expulsion des flots inactifs depuis une durée déterminée.

8. Procédé selon la revendication 1, dans lequel, lors de l'étape d'envoi du profil de qualité de service, la passerelle d'utilisateur émet à destination du noeud d'accès un signal véhiculant un message de configuration du noeud d'accès comprenant ledit profil de qualité de service à associer au flot donné.

9. Passerelle (3, 5) d'utilisateur dans un réseau de communication par paquets, agencée pour recevoir des paquets appartenant à au moins un flot en provenance d'un noeud d'accès (4), comprenant :
- des moyens (102) de détermination en fonction d'une catégorie du flot d'un profil de qualité de service, agencés pour déterminer un profil de qualité de service à associer au flot, suite à la réception d'un paquet en provenance du noeud d'accès, ledit paquet permettant à la passerelle d'obtenir des informations relatives à la catégorie du flot ;
- des moyens (103) d'envoi au noeud d'accès du profil déterminé de qualité de service à associer au flot donné pour la transmission de paquets à destination de la passerelle et appartenant au flot donné.

10. Noeud (4) d'accès dans un réseau de communication par paquets, coopérant avec au moins une passerelle (3, 5) d'utilisateur selon la revendication 9, agencé pour transmettre des paquets appartenant à des flots vers ladite passerelle (3, 5) d'utilisateur en fonction d'un profil de qualité de service associé aux flots, **caractérisé en ce qu'**il comprend :
- des moyens (203) de réception, en provenance de la passerelle, d'un profil de qualité de service à associer à un flot pour la transmission de paquets à destination de la passerelle et appartenant au flot donné;
- des moyens (204) d'enregistrement dans une table (205) de flots du profil de qualité de service reçu et à associer à un identifiant (21) du flot considéré.

11. Système dans un réseau de communication par paquets comprenant au moins un noeud (4) d'accès selon la revendication 10 et au moins une passerelle (3, 5) d'utilisateur selon la revendication 9.

12. Programme de configuration de profils de qualité de service de flot, pour un noeud d'accès d'un réseau de communication par paquets, comprenant des instructions de programme pour recevoir, en provenance d'une passerelle mettant en oeuvre un procédé selon la revendication 1, un profil de qualité de service à associer à un flot. pour enregistrer dans une table (205) de flots le profil de qualité de service reçu et à associer au flot considéré, pour transmettre des paquets appartenant au flot considéré vers la passerelle en fonction du profil de qualité de service associé, lorsque ledit programme est exécuté par celui-ci.

13. Support d'enregistrement lisible par un noeud d'accès sur lequel est enregistré le programme selon la revendication 12.

14. Programme pour passerelle d'utilisateur d'un réseau de communication par paquets, de commande de la configuration de profils de qualité de service de flot au niveau d'un noeud d'accès dudit réseau, comprenant des instructions de programme destinées à commander l'exécution de celles des étapes du procédé selon les revendications 1 à 8 qui sont exécutées par ladite passerelle, lorsque ledit programme est exécuté par celle-ci.

15. Support d'enregistrement lisible par une passerelle d'utilisateur sur lequel est enregistré le programme selon la revendication 14.

## Patentansprüche

1. Verfahren zur Konfiguration des Dienstqualitätsprofils eines vorgegebenen Datenflusses an einem Zugangsknoten (4) eines Paket-Kommunikationsnetzwerks, mit dem mindestens ein User-Gateway (3, 5), der Empfänger des Datenflusses ist, verbunden ist, wobei das Verfahren Folgendes umfasst:
- einen Schritt (E4, E6) zum Bestimmen, durch den Gateway auf dessen eigene Initiative in Abhängigkeit von einer Kategorie des Datenflusses, eines mit dem Datenfluss zu assoziierenden Dienstqualitätsprofils, der beim Empfang eines Pakets, das von dem Zugangsknoten kommt, ausgelöst wird, wobei das Paket dem Gateway ermöglicht, Informationen bezüglich der Kategorie des Datenflusses zu erhalten;
- einen Schritt (E8) zum Senden des auf diese Weise bestimmten Dienstqualitätsprofils durch den Gateway an den Zugangsknoten, wobei das Profil dazu bestimmt ist, von dem Zugangsknoten für die Übertragung der Pakete verwendet zu werden, deren Bestimmungsort der Gateway ist und die zum betrachteten Datenfluss gehören.

2. Verfahren nach Anspruch 1, wobei das Paket, das von dem Zugangsknoten kommt, zu dem betrachteten Datenfluss gehört.

3. Verfahren nach Anspruch 1, wobei das Paket, das von dem Zugangsknoten kommt, zu einem anderen Datenfluss gehört und eine Information zur Erzeugung des betrachteten Datenflusses umfasst.

4. Verfahren nach Anspruch 2 oder 3, wobei die Schritte zum Bestimmen und zum Senden des Dienstqualitätsprofils am Ende eines Schritts (E3) zum Suchen eines Identifiers (21) des Datenflusses in einer Tabelle (105) von Datenflüssen, die mit dem Gateway assoziiert ist und in der Dienstqualitätsprofile (22), die mit Identifiern (21) von Datenflüssen assoziiert sind, gespeichert sind, und wenn die Suche negativ ist, durchgeführt werden.

5. Verfahren nach einem der vorhergehenden Ansprüche, wobei beim Empfang eines Pakets mit dem Bestimmungsort User-Gateway (3, 5) durch den Zugangsknoten (4), wobei das Paket zu einem betrachteten Datenfluss gehört, Folgendes vorgesehen ist:
- ein Schritt (F3) zum Suchen eines Dienstqualitätsprofils, das mit dem Identifier (21) des Datenflusses assoziiert ist, in einer Tabelle (205) von Datenflüssen, die mit dem Knoten (4) assoziiert ist und in der Dienstqualitätsprofile, die mit Datenflüssen assoziiert sind, gespeichert sind;
- wenn die Suche negativ ist, ein Schritt zum Übertragen des Pakets zum Gateway (3, 5) unter Anwendung eines Default-Dienstqualitätsprofils.

6. Verfahren nach einem der vorhergehenden Ansprüche, das ferner einen vorausgehenden Schritt (E0) zum Definieren von Kategorien von Datenflüssen bezogen auf Dienstqualitätsanforderungen umfasst und wobei der Schritt zum Bestimmen, durch den Gateway, eines Dienstqualitätsprofils, das mit dem Identifier des Datenflusses zu assoziieren ist, die folgenden untergeordneten Schritte umfasst, die mindestens im
- Auswählen (E4) einer dieser Kategorien für den betrachteten Datenfluss, und
- in Abhängigkeit von der ausgewählten Kategorie, Assoziieren (E6) eines Dienstqualitätsprofils, das mit der Kategorie assoziiert ist, mit dem Identifier des Datenflusses
bestehen.

7. Verfahren nach einem der vorhergehenden Ansprüche, wobei mit dem Identifier des betrachteten Datenflusses ein temporärer Ankunftsparameter eines Pakets des Datenflusses assoziiert wird, wobei der Parameter beim Empfang eines neuen Pakets des Datenflusses in den beiden Tabellen (105, 205) von Datenflüssen, die jeweils mit dem Zugangsknoten und mit dem Gateway assoziiert sind, aktualisiert wird (E5, E7, F5), wobei das Verfahren ferner einen Schritt zum Entfernen der inaktiven Datenflüsse ab einer bestimmten Dauer umfasst.

8. Verfahren nach Anspruch 1, wobei, während des Schritts zum Senden des Dienstqualitätsprofils, der User-Gateway ein Signal mit Bestimmungsort Zugangsknoten schickt, das eine Nachricht zur Konfiguration des Zugangsknotens transportiert, die das Dienstqualitätsprofil umfasst, das mit dem vorgegebenen Datenfluss zu assoziieren ist.

9. User-Gateway (3, 5) in einem Paket-Kommunikationsnetzwerk, der eingerichtet ist, um Pakete zu empfangen, die zu mindestens einem Datenfluss gehören, der von einem Zugangsknoten (4) kommt, umfassend:
- Mittel (102) zum Bestimmen eines Dienstqualitätsprofils in Abhängigkeit von einer Kategorie des Datenflusses, die eingerichtet sind, um ein Dienstqualitätsprofil zu bestimmen, das mit dem Datenfluss zu assoziieren ist, nach dem Empfang eines Pakets, das von dem Zugangsknoten kommt, wobei das Paket dem Gateway ermöglicht, Informationen bezüglich der Kategorie des Datenflusses zu erhalten;
- Mittel (103) zum Senden des bestimmten Dienstqualitätsprofils, das mit dem vorgegebenen Datenfluss zu assoziieren ist, an den Zugangsknoten für die Übertragung von Paketen, deren Bestimmungsort der Gateway ist und die zu dem vorgegebenen Datenfluss gehören.

10. Zugangsknoten (4) in einem Paket-Kommunikationsnetzwerk, der mit mindestens einem User-Gateway (3, 5) nach Anspruch 9 zusammenwirkt, der eingerichtet ist, um Pakete, die zu Datenflüssen gehören, in Abhängigkeit von einem Dienstqualitätsprofil, das mit den Datenflüssen assoziiert ist, zum User-Gateway (3, 5) zu übertragen, **dadurch gekennzeichnet, dass** er Folgendes umfasst:
- Mittel (203) zum Empfangen eines Dienstqualitätsprofils, das von dem Gateway kommt, das mit einem Datenfluss zu assoziieren ist, für die Übertragung von Paketen, deren Bestimmungsort der Gateway ist und die zu dem vorgegebenen Datenfluss gehören;
- Mittel (204) zum Aufzeichnen in einer Tabelle (205) von Datenflüssen des empfangenen und mit einem Identifier (21) des betrachteten Datenflusses zu assoziierenden Dienstqualitätsprofils.

11. System in einem Paket-Kommunikationsnetzwerk, umfassend mindestens einen Zugangsknoten (4) nach Anspruch 10 und mindestens einen User-Gateway (3, 5) nach Anspruch 9.

12. Programm zur Konfiguration von Datenfluss-Dienstqualitätsprofilen für einen Zugangsknoten eines Paket-Kommunikationsnetzwerks, umfassend Programmanweisungen, um ein Dienstqualitätsprofil, das von einem Gateway kommt, wobei ein Verfahren nach Anspruch 1 eingesetzt wird, das mit einem Datenfluss zu assoziieren ist, zu empfangen, um in einer Tabelle (205) von Datenflüssen das empfangene und mit dem betrachteten Datenfluss zu assoziierende Dienstqualitätsprofil aufzuzeichnen, um Pakete, die zu dem betrachteten Datenfluss gehören, in Abhängigkeit vom assoziierten Dienstqualitätsprofil zum Gateway zu übertragen, wenn das Programm von diesem ausgeführt wird.

13. Aufzeichnungsmedium, das von einem Zugangsknoten gelesen werden kann, auf dem das Programm nach Anspruch 12 aufgezeichnet ist.

14. Programm für einen User-Gateway eines Paket-Kommunikationsnetzwerks, zum Steuern der Konfiguration von Datenfluss-Dienstqualitätsprofilen an einem Zugangsknoten des Netzwerks, umfassend Programmanweisungen, die dazu bestimmt sind, die Ausführung jener der Schritte des Verfahrens nach den Ansprüchen 1 bis 8 zu steuern, die von dem Gateway ausgeführt werden, wenn das Programm von diesem ausgeführt wird.

15. Aufzeichnungsmedium, das von einem User-Gateway gelesen werden kann, auf dem das Programm nach Anspruch 14 aufgezeichnet ist.

## Claims

1. Method for configuring the quality-of-service profile of a given flow at the level of an access node (4) of a packet communication network to which is connected at least one user gateway (3, 5) for which said flow is destined, said method comprising:
- a step (E4, E6) of determining by the gateway as a function of a category of the flow a quality-of-service profile to be associated with a flow, on its own initiative, triggered on receipt of a packet originating from the access node, said packet allowing the gateway to obtain information relating to the category of the flow;
- a step (E8) of dispatching by the gateway to the access node the quality-of-service profile thus determined, said profile being intended to be used by the access node for the transmission of the packets destined for the gateway and belonging to the flow considered.

2. Method according to Claim 1, in which said packet originating from the access node belongs to the flow considered.

3. Method according to Claim 1, in which said packet originating from the access node belongs to another flow and comprises an item of information in respect of creation of the flow considered.

4. Method according to Claim 2 or 3, in which the steps of determining and dispatching the quality-of-service profile are performed on completion of a step (E3) of searching for an identifier (21) of the flow in a flow table (105) associated with the gateway and storing quality-of-service profiles (22) associated with flow identifiers (21) and if said search is negative.

5. Method according to any one of the preceding claims, in which, on receipt by the access node (4) of a packet destined for the user gateway (3,5), said packet belonging to a flow considered, there is provided:
- a step (F3) of searching for a quality-of-service profile associated with the identifier (21) of said flow in a flow table (205) associated with the node (4) and storing quality-of-service profiles associated with flows;
- if the search is negative, a step of transmitting the packet to the gateway (3,5) with application of a default quality-of-service profile.

6. Method according to any one of the preceding claims, furthermore comprising a prior step (E0) of defining categories of flows in relation to quality-of-service needs and in which the step of determining by the gateway a quality-of-service profile to be associated with the identifier of the flow comprises the sub-steps consisting at least in
- selecting (E4) for the flow considered one from among said categories and,
- as a function of the category selected, associating (E6) with the identifier of the flow a quality-of-service profile associated with said category.

7. Method according to any one of the preceding claims, in which a temporal parameter of arrival of a packet of the flow is associated with the identifier of the flow considered, said parameter being updated (E5, E7, F5) on receipt of a new packet of the flow in the two flow tables (105, 205) respectively associated with the access node and with the gateway, said method furthermore comprising a step of expelling the flows that have been inactive for a determined duration.

8. Method according to Claim 1, in which, during the step of dispatching the quality-of-service profile, the user gateway sends the access node a signal conveying a configuration message in respect of the access node comprising said quality-of-service profile to be associated with the given flow.

9. User gateway (3, 5) in a packet communication network, designed to receive packets belonging to at least one flow originating from an access node (4), comprising:
- means (102) for determining as a function of a category of the flow a quality-of-service profile, which means are designed to determine a quality-of-service profile to be associated with the flow, subsequent to the receipt of a packet originating from the access node, said packet allowing the gateway to obtain information relating to the category of the flow;
- means (103) for dispatching to the access node the determined quality-of-service profile to be associated with the given flow for the transmission of packets destined for the gateway and belonging to the given flow.

10. Access node (4) in a packet communication network, cooperating with at least one user gateway (3, 5) according to Claim 9, and designed to transmit packets belonging to flows to said user gateway (3, 5) as a function of a quality-of-service profile associated with the flows, **characterized in that** it comprises:
- means (203) for receiving, originating from the gateway, a quality-of-service profile to be associated with a flow for the transmission of packets destined for the gateway and belonging to the given flow;
- means (204) for recording in a flow table (205) the quality-of-service profile received and to be associated with an identifier (21) of the flow considered.

11. System in a packet communication network comprising at least one access node (4) according to Claim 10 and at least one user gateway (3, 5) according to Claim 9.

12. Program for configuring profiles of quality-of-service of flow, for an access node of a packet communication network, comprising program instructions for receiving, originating from a gateway implementing a method according to Claim 1, a quality-of-service profile to be associated with a flow and for recording in a flow table (205) the quality-of-service profile received and to be associated with the flow considered, for transmitting packets belonging to the flow considered to the gateway as a function of the associated quality-of-service profile, when said program is executed by the latter.

13. Recording medium readable by an access node on which the program according to Claim 12 is recorded.

14. Program for user gateway of a packet communication network, for controlling the configuration of profiles of quality-of-service of flow at the level of an access node of said network, comprising program instructions intended to control the execution of those of the steps of the method according to Claims 1 to 8 which are executed by said gateway, when said program is executed by the latter.

15. Recording medium readable by a user gateway and on which the program according to Claim 14 is recorded.
